(19) **Europäisches Patentamt / European Patent Office / Office européen des brevets**

(11) **EP 4 216 424 B1**

(12) **FASCICULE DE BREVET EUROPEEN**

(45) Date de publication et mention
de la délivrance du brevet:
**20.08.2025 Bulletin 2025/34**

(21) Numéro de dépôt: **23151917.4**

(22) Date de dépôt: **17.01.2023**

(51) Classification Internationale des Brevets (IPC):
*H02P 21/00* (2016.01)   *H02P 21/14* (2016.01)
*H02P 21/18* (2016.01)   *H02P 21/22* (2016.01)
*H02P 25/024* (2016.01)

(52) Classification Coopérative des Brevets (CPC):
**H02P 21/0021; H02P 21/0085; H02P 21/14;
H02P 21/18; H02P 21/22; H02P 25/024**

(54) **PROCÉDÉ ET SYSTÈME DE COMMANDE D'UNE MACHINE ÉLECTRIQUE PILOTÉE PAR UN ONDULEUR POURVU DE PLUSIEURS BRAS DE COMMUTATION AVEC DEUX METHODES D'ASSERVISSEMENT**

VERFAHREN UND SYSTEM ZUR STEUERUNG EINER VON EINEM WECHSELRICHTER GESTEUERTEN ELEKTRISCHEN MASCHINE MIT MEHREREN SCHALTARMEN MIT ZWEI SERVOVERFAHREN

METHOD AND SYSTEM FOR CONTROLLING AN ELECTRIC MACHINE DRIVEN BY AN INVERTER PROVIDED WITH A PLURALITY OF SWITCHING ARMS WITH TWO SERVO-CONTROL METHODS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **20.01.2022 FR 2200475**

(43) Date de publication de la demande:
**26.07.2023 Bulletin 2023/30**

(73) Titulaire: **IFP Energies nouvelles
92500 Rueil-Malmaison (FR)**

(72) Inventeurs:
• **VIDAL-NAQUET, Fabien
92852 RUEIL-MALMAISON CEDEX (FR)**
• **KUENTZMANN, Emmanuel
92852 RUEIL-MALMAISON CEDEX (FR)**
• **HAJE OBEID, Najla
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**FR-A1- 3 112 043    US-A1- 2020 343 844**

## Description

### Domaine technique

La présente invention concerne un procédé de commande d'une machine électrique tournante, de préférence une machine électrique synchrone, par exemple du type synchro-reluctante ou synchrone à aimants permanents.

L'invention concerne également un système de commande mettant en œuvre un tel procédé.

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Le document FR 3 051 296 A1 décrit, par exemple, une machine synchro-réluctante assistée d'aimants permanents.

Un procédé de commande d'une telle machine électrique comprend généralement le calcul de courants et de tensions dits « directs » et « en quadrature » (également appelé « quadratique »), qui sont des courants et des tensions exprimés dans un repère tournant lié au rotor, et la mise en œuvre d'un ou plusieurs asservissements, afin de déterminer les tensions à appliquer à chaque phase de la machine tournante. Dans le cas de la mise en œuvre de deux asservissements, l'un peut porter sur les grandeurs dites « directes », et l'autre peut porter sur les grandeurs dites « en quadrature »,

Par conséquent, déterminer les composantes référentielles (appelées également consignes), directes et en quadrature du courant de stator est une étape cruciale à ce niveau, et ceci afin de garantir un niveau optimal de performance de la machine électrique. La complexité de la détermination du courant de référence dépend en effet de la nature de la machine utilisée :

- Pour une machine synchrone à pôles lisses et non saturée magnétiquement, les composantes directe et quadratique du courant peuvent s'obtenir d'une manière linéaire et directe du couple demandé, et
- Pour d'autres machines, telles que les machines synchro-reluctante saturées magnétiquement, l'obtention des composantes de référence du courant de stator fait appel à des méthodes plus sophistiquées et plus complexes.

En outre, la détermination des composantes référentielles, directe et en quadrature du courant de stator dépend de l'atteinte ou non d'un régime dit « de saturation de tension ». Lorsqu'un tel régime est atteint, il est encore possible d'accroître la vitesse de rotation du rotor de la machine tout en limitant significativement la décroissance du couple mécanique fourni par la machine tournante, et ce en réalisant une opération appelée « défluxage ».

Par « régime de saturation de tension », il est entendu, au sens de la présente invention, une situation dans laquelle tension appliquée aux bornes de la machine tournante devient égale à une tension maximale disponible, dont la valeur dépend notamment de l'installation électrique à laquelle la machine tournante est raccordée, de sorte qu'il n'est plus possible d'augmenter la tension d'alimentation de la machine tournante.

Par « défluxage », il est entendu, au sens de la présente invention, un procédé de commande d'une telle machine électrique, comprenant une injection de courant au niveau des phases, c'est-à-dire des enroulements, du stator de la machine tournante afin de compenser, au moins en partie, le champ magnétique généré par les aimants du rotor de ladite machine électrique tournante.

On distingue également en général deux « régimes de saturation de tension », selon la valeur de la tension phase à phase maximale appliquée aux bornes de la machine tournante : les régimes « linéaire » et de « surmodulation »

Par régime de saturation de tension « linéaire » il est entendu une situation où l'amplitude maximale de la tension phase à phase de la machine électrique est environ égale à celle de l'installation électrique à laquelle la machine tournante est raccordée, dite « tension de bus ».

Par régime de saturation de tension de « surmodulation », il est entendu une situation où l'amplitude maximale de la tension phase à phase de la machine électrique est strictement supérieure à la tension de bus. La valeur de la tension phase à phase la plus élevée atteignable dans ce régime de surmodulation correspond à une commande dite « en pleine onde », et est égale classiquement à $\frac{2\sqrt{3}}{\pi}$ fois la tension de bus. Le régime de « surmodulation » permet, par une meilleure utilisation de tension de bus, de limiter l'injection additionnelle de courant de défluxage. Ainsi, on améliore, en général, le rendement et la performance maximale de la machine électrique.

### Technique antérieure

En régime de fonctionnement non saturé en tension, on utilise en général une méthode d'asservissement « complet » (appelée aussi méthode d'asservissement à deux dimensions ou méthode d'asservissement à deux degrés de liberté). En effet, l'asservissement des composantes « directe » et « en quadrature » des courants peut se réaliser complétement, par exemple par la mise en œuvre de deux asservissements, l'un portant sur les grandeurs dites « directes », et l'autre portant sur les grandeurs dites « en quadrature », afin de déterminer les tensions « directe » et « en quadrature », puis celles à appliquer à chaque phase de la machine tournante.

Cependant, lorsque l'on se trouve en régime de « saturation de tension », les composantes « directe » et « en quadrature » des tensions ne sont plus complétement indépendantes car leur somme quadratique est contrainte par la tension maximale autorisée.

Pour un fonctionnement en régime de saturation « linéaire », ou proche de celui-ci, une méthode d'asservissement « complet », telle que décrite ci-dessus peut encore permettre le pilotage de la machine électrique. En revanche, en régime de « surmodulation », cette méthode ne permet plus le pilotage correct de la machine électrique, particulièrement dans la situation où l'on souhaite approcher la commande dite en pleine onde. Dans ce cas, la somme quadratique des composantes « directe » et « en quadrature » des tensions est complétement déterminée, et il ne reste plus qu'un seul degré de liberté pour choisir la tension de commande.

Il est alors nécessaire de mettre en place une méthode d'asservissement alternative des courants du stator. On utilise en général une méthode d'asservissement « à tension fixe » (également appelée méthode d'asservissement à une dimension ou méthode d'asservissement à un degré de liberté). En effet, on peut par exemple fixer la somme quadratique des composantes « directe » et « en quadrature » des tensions, et utiliser le degré de liberté restant pour asservir soit la composante « directe » des courants du stator, soit leur composante « en quadrature », soit encore toute autre variable calculée à partir des courants du stator.

Ainsi, en régime de « surmodulation », il n'est plus possible d'asservir à la fois les composantes « directe » et « en quadrature » des courants du stator. Ce type de méthode d'asservissement alternative, dite « à tension fixe », qui fonctionne de manière générale en régime de « saturation de tension », n'est donc pas pertinent en dehors de ce régime de fonctionnement particulier.

En conséquence, un procédé de commande d'une machine électrique doit généralement comporter deux méthodes d'asservissements différentes, utilisées selon que l'on se situe en régime de « surmodulation » ou en dehors du régime de « saturation de tension ». En régime de « saturation de tension linéaire », les deux méthodes d'asservissement, « complet » ou « à tension fixe » peuvent être utilisées au choix.

La demande de brevet FR3089368 décrit un tel procédé de commande de machine électrique, et divulgue en particulier une mise en oeuvre d'une méthode d'asservissement à tension fixe.

Selon que l'on utilise la méthode d'asservissement « complet » des courants de stator ou celle « à tension fixe », les conséquences d'une détermination non optimale des composantes référentielles directe et en quadrature des courants de stator varient grandement.

Dans le cas de la méthode d'asservissement « complet », il est courant d'obtenir une tension de commande dont l'amplitude n'est pas celle anticipée lors de l'étape de détermination des composantes référentielles des courants de stator. Si l'amplitude de tension obtenue est inférieure à celle qui est anticipée et que l'on se trouve en régime de saturation de tension, le rendement ou la performance maximale de la machine électrique sont négativement impactés. Si l'amplitude de tension obtenue est supérieure à celle qui est anticipée et que l'on se trouve en régime de saturation de tension, elle est donc supérieure à l'amplitude maximale autorisée et n'est donc pas réalisable.

Dans le cas de la méthode d'asservissement « à tension fixe », l'amplitude de la tension de commande est par définition correctement appliquée. En revanche, les composantes référentielles directe et en quadrature des courants de stator n'étant pas simultanément asservies, au moins l'une d'entre elles n'est pas obtenue dans le cas général, ce qui conduit à une erreur de réalisation de couple.

La demande de brevet FR3112043A1 décrit un procédé et système de commande d'une machine électrique synchrone.

**Résumé de l'invention**

L'invention a pour but de contrôler une machine électrique tournante pour tout régime de fonctionnement : hors du régime de saturation de tension, et en régime de saturation de tension, y compris en régime de surmodulation. L'invention a notamment pour but de garantir simultanément deux objectifs :

- Une utilisation optimale de la tension de bus, permettant l'amélioration du rendement de la machine électrique et/ou de la performance maximale de la machine électrique, y compris en cas de calcul imparfait des consignes de courant optimales, quand l'asservissement est « complet », et

- Une amélioration de la précision de couple réalisé, grâce à l'obtention maîtrisée d'un binôme de composantes directe et en quadrature des courants, quand l'asservissement est « à tension fixe ».

Dans ces buts, la présente invention concerne un procédé et un système de commande d'une machine électrique pilotée par un onduleur, dans lequel on détermine la commande de l'onduleur. Le procédé et le système de commande selon l'invention mettent en œuvre un modèle de contrôle qui calcule les consignes de courant en fonction de la consigne de couple ou de la consigne de vitesse et d'autres variables de fonctionnement dont une variable de fonctionnement corrigée. La correction de cette variable de fonctionnement est mise en œuvre au moyen d'une boucle de rétroaction asservissant la tension de commande de la machine électrique à une valeur prédite de cette tension de commande. Puis, l'invention met en œuvre, en fonction du régime de fonctionnement de la machine électrique, un asservissement complet ou un asservissement à tension fixe pour déterminer les consignes de tension.

L'invention concerne un procédé de commande d'une machine électrique pilotée par un onduleur pourvu de plusieurs bras de commutation, dans lequel on met en œuvre les étapes suivantes :

a. On acquiert une consigne de couple de ladite machine électrique ;
b. On acquiert une consigne ou une mesure d'au moins une variable de fonctionnement de ladite machine électrique ;
c. On détermine un paramètre de correction d'une variable de fonctionnement en fonction d'une prédiction de tension absolue dépendante des courants dans les phases de ladite machine électrique, et en fonction de consignes de tension ;
d. On détermine des consignes de courant de ladite machine électrique au moyen d'un modèle de contrôle qui relie ladite consigne de couple, ladite au moins une variable de fonctionnement, et lesdites consignes de courant de ladite machine électrique, une variable de fonctionnement étant corrigée au moyen dudit paramètre de correction ;
e. On détermine un régime de fonctionnement de ladite machine électrique, et on détermine une méthode d'asservissement desdites consignes de courant en fonction dudit régime de fonctionnement de ladite machine électrique, ladite méthode d'asservissement reliant lesdites consignes de tension auxdites consignes de courant, de préférence on détermine ladite méthode d'asservissement parmi deux méthodes d'asservissement ;
f. On applique ladite méthode d'asservissement déterminée auxdites consignes de courant pour déterminer lesdites consignes de tension ;
g. On détermine un signal de commande de commutation dudit onduleur au moyen desdites consignes de tension ; et

On commande ledit onduleur au moyen dudit signal de commande.

Selon un mode de réalisation, ledit modèle de contrôle est une cartographie qui relie ladite consigne de couple, lesdites variables de fonctionnement et lesdites consignes de courant.

Conformément à une mise en œuvre, on détermine, par un estimateur, ladite prédiction de tension absolue au moyen de mesures desdits courants dans lesdites phases de ladite machine électrique.

Selon un aspect, on détermine ladite méthode d'asservissement par comparaison d'un indice de modulation cible à un seuil.

Selon l'invention, ladite méthode d'asservissement est choisie parmi une méthode d'asservissement complet ou une méthode d'asservissement à tension fixe. Avantageusement, si ledit indice de modulation cible est supérieur audit seuil, on applique ladite méthode d'asservissement à tension fixe.

De manière avantageuse, ladite méthode d'asservissement complet met en œuvre deux régulateurs proportionnel intégral, et ladite méthode d'asservissement à tension fixe met en œuvre un unique régulateur proportionnel intégral.

De préférence, l'unique régulateur proportionnel intégral de ladite méthode d'asservissement à tension fixe détermine la consigne de tension en quadrature au moyen de la formule : $v_q^{sp} = \mathrm{K'}_{p,q}(\mathrm{i}_0 - \mathrm{i}_{ref}) + \mathrm{K'}_{i,q} \int_{t_0}^{t_f}(\mathrm{i}_0 - \mathrm{i}_{ref})\mathrm{dt}$

avec $v_q^{sp}$ ladite consigne de tension en quadrature, $\mathrm{K'}_{p,q}$ et $\mathrm{K'}_{i,q}$ des coefficients prédéterminés de l'unique régulateur proportionnel intégral, $\mathrm{i}_0$ une grandeur définie par $\mathrm{i}_0 = \sqrt{\mathrm{i}_q^2 + \mathrm{i}_d^2}$, $\mathrm{i}_{ref}$ une grandeur définie par $\mathrm{i}_{ref} = \sqrt{i_d^{sp\,2} + i_q^{sp\,2}}$, $t_0$ un instant initial prédéterminé, $t_f$ un instant final prédéterminé ultérieur à l'instant initial, $\mathrm{i}_d$ et $\mathrm{i}_q$ respectivement un courant direct mesuré et un courant en quadrature mesuré, $i_d^{sp}$, $i_q^{sp}$ respectivement une consigne de courant direct et une consigne de courant en quadrature.

Avantageusement, on détermine la consigne de tension directe au moyen de la formule : $v_d^{sp} = \sqrt{\mathrm{v}_{\mathrm{smax}}^2 - \left(v_q^{sp}\right)^2}$ avec $v_d^{sp}$ la consigne de tension directe, $\mathrm{v}_{\mathrm{smax}}$ est une tension limite définie par la formule $v_{smax} = \frac{U_{smax}}{\sqrt{3}}$ pour une machine électrique pour laquelle les bobinages des phases sont montés en étoile, ou par la formule $v_{smax} = U_{smax}$ pour une machine électrique pour laquelle les bobinages des phases sont montés en triangle, $U_{smax}$

étant défini par $U_{smax} = mV_{DC}$ avec m ledit indice de modulation prédéterminé de l'onduleur et $V_{DC}$ la tension de bus continue alimentant ledit onduleur.

Selon une option de réalisation, ledit régime de fonctionnement de ladite machine électrique est déterminé parmi un régime de fonctionnement sans saturation de tension, un régime de fonctionnement de saturation de tension de surmodulation ou un régime de fonctionnement de saturation de tension linéaire.

Conformément à un mode de réalisation, on détermine ledit paramètre de correction en mettant en œuvre les étapes suivantes :

i) On détermine une prédiction de tension absolue ($v_{abs}{}^{pred}$) ;

ii) On acquiert lesdites consignes de tension ($V_d{}^{sp}$, $V_q{}^{sp}$) ;

iii) On calcule une tension absolue de consigne par la formule : $V_{abs}^{sp} = \sqrt{V_d^{sp\,2} + V_q^{sp\,2}}$ , $V_d{}^{sp}$ et $V_q{}^{sp}$ étant respectivement les consignes de tension directe et en quadrature

iv) On compare ladite prédiction de tension absolue ($v_{abs}{}^{pred}$) à ladite tension absolue de consigne ($v_{abs}{}^{sp}$) ; et

v) On en déduit ledit paramètre de correction (Pco) à partir de ladite comparaison.

Selon une mise en œuvre, on détermine ledit signal de commande de commutation au moyen d'un contrôle vectoriel.

Conformément à un aspect, ladite variable de fonctionnement corrigée est la vitesse de rotation de ladite machine électrique, la tension de bus continue de l'onduleur ou la norme de la tension de commande maximale de l'onduleur.

De plus, l'invention concerne un système de commande d'une machine électrique comprenant un onduleur pourvu de bras de commutation, un calculateur et une mémoire configurée pour mettre en œuvre les étapes du procédé de commande selon l'une des caractéristiques précédentes pour commander ledit onduleur, de préférence ladite machine électrique est une machine synchro-reluctante assistée par des aimants permanents ou une machine synchrone à aimants permanents.

D'autres caractéristiques et avantages du système et du procédé selon l'invention, apparaîtront à la lecture de la description ci-après d'exemples non limitatifs de réalisations, en se référant aux figures annexées et décrites ci-après.

**Liste des figures**

La figure 1 illustre le système de commande selon un mode de réalisation de l'invention.

La figure 2 illustre les étapes du procédé de commande selon un premier mode de réalisation de l'invention.

La figure 3 illustre les étapes du procédé de commande selon un deuxième mode de réalisation de l'invention.

La figure 4 illustre, pour un premier exemple, le fonctionnement d'un mode de réalisation de l'invention.

La figure 5 illustre, pour un deuxième exemple, le fonctionnement d'un mode de réalisation de l'invention.

La figure 6 illustre, pour un troisième exemple, le fonctionnement d'un mode de réalisation de l'invention.

La figure 7 illustre, pour un quatrième exemple, le fonctionnement d'un mode de réalisation de l'invention.

**Description des modes de réalisation**

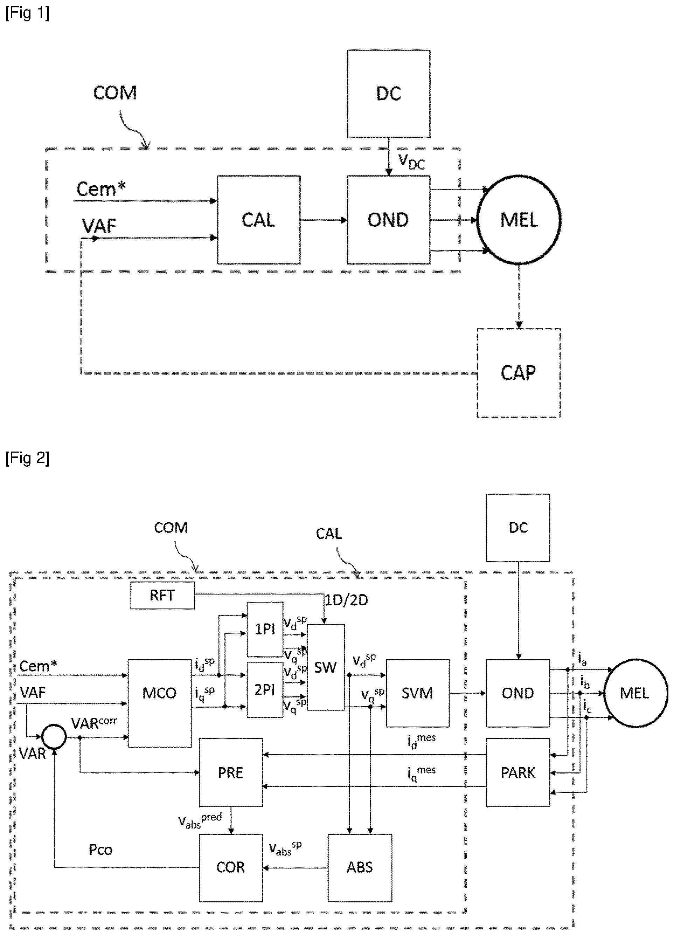

Sur la figure 1 est représentée, schématiquement et de manière non limitative, une installation comprenant une machine électrique tournante MEL associée, pour sa commande, à un système de commande COM selon l'invention (le système de commande COM mettant en œuvre le procédé de commande selon l'invention). L'installation comporte également une source DC d'énergie électrique, telle qu'un bus de tension continue.

**EP 4 216 424 B1**

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. De préférence, la machine électrique synchrone MEL peut être une machine électrique synchrone à aimants permanents ou synchro-réluctante, en particulier une machine tournante triphasée synchro-réluctante assistée d'aimants permanents. En effet, de telles machines électriques possèdent des capacités de défluxage importantes.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique. Pour le procédé et le système selon l'invention, le système de commande COM prend en compte une consigne de couple Cem* (qui peut provenir classiquement d'une demande de l'utilisateur de la machine électrique, alternativement cette consigne de couple peut être calculée par une régulation de vitesse), et au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, d'une variable mécanique comme la position, la vitesse ou l'accélération du rotor de la machine électrique, etc. Les variables de fonctionnement peuvent par exemple être la vitesse de rotation électrique $\omega_e$ du rotor (non représenté) de la machine électrique (alternativement cette variable peut aussi être la norme du flux magnétique dans les phases), l'amplitude de tension de la machine électrique, l'amplitude du courant de la machine électrique, une température de la machine électrique, le flux magnétique dû aux aimants, etc. On rappelle que la vitesse de rotation électrique $\omega_e$ du rotor correspond à la multiplication de la vitesse de rotation mécanique $\omega_m$ du rotor par le nombre de paires de pôles de la machine électrique synchrone MEL. En d'autres termes, on peut écrire : $\omega_e = p.\omega_m$ avec p le nombre de paires de pôles de la machine électrique synchrone MEL.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire $\omega_m$ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée $V_{DC}$.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représenté), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connu sous l'acronyme MLI (ou PWM de l'anglais Pulse Width Modulation).

Le capteur optionnel de position angulaire ou de vitesse de rotation angulaire CAP peut être configuré pour mesurer la position mécanique angulaire voire la position électrique angulaire, d'un rotor (non représenté) de la machine électrique synchrone par rapport au stator (non représenté), et pour délivrer un signal de position angulaire (respectivement de vitesse de rotation angulaire) représentatif de la valeur mesurée de la position angulaire (respectivement de la vitesse de rotation angulaire) du rotor de la machine électrique tournante.

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Le procédé de commande d'une machine électrique tournante selon l'invention comporte les étapes suivantes en temps réel :

- Acquisition (Réception) de la consigne de couple de la machine électrique synchrone,
- Acquisition d'une consigne ou d'une mesure d'une seule ou d'une pluralité de variables de fonctionnement de la machine électrique,
- Détermination d'un paramètre de correction d'une variable de fonctionnement, en fonction d'une prédiction (estimation) de tension absolue dépendante des courants dans les phases de la machine électrique, et en fonction de consignes de tension (notamment en fonction de la tension absolue de consigne),
- Détermination de consignes de courant de la machine électrique synchrone, au moyen d'au moins un modèle de contrôle, le modèle de contrôle relie :

  o La consigne de couple,
  o L'au moins une variable de fonctionnement,
  o Une variable de fonctionnement (parmi l'au moins une variable de fonctionnement) étant corrigée au moyen dudit paramètre de correction, et
  o Les consignes de courant : les consignes de courant dits « direct » et « en quadrature », (ou de manière analogue, la consigne de la norme de courant et de l'angle de défluxage),

- Détermination du régime de fonctionnement de la machine électrique (également appelé régime de saturation de la machine électrique) et d'une méthode d'asservissement associée,
- Détermination de consignes de tension par application de la méthode d'asservissement aux consignes de courant,
- Détermination d'un signal de commande de commutation de l'onduleur au moyen des consignes de tension, et
- Commande de l'onduleur au moyen du signal de commande de commutation.

Dans la suite de la description et dans les revendications, le terme « consignes de courant » désigne soit les consignes de courant « direct » et « en quadrature », soit la norme de courant et l'angle de défluxage, ou tout autre représentation équivalente des courants.

Ainsi, le procédé de commande selon l'invention détermine des consignes de tension, en prenant en compte une valeur adaptée de la variable de fonctionnement corrigée, ainsi qu'une méthode d'asservissement adaptée. Cette valeur adaptée de la variable de fonctionnement corrigée étant obtenue notamment au moyen des consignes ou des mesures de courant, formant une boucle de retour (rétroaction) dans le procédé de commande. De plus, la boucle de retour du procédé de commande ne modifie pas directement les consignes de tension déterminées, mais uniquement les consignes de courant, dans le but de maîtriser lesdites consignes de tension. De cette manière, le procédé de commande selon l'invention peut utiliser, en temps réel, de manière optimale et robuste la tension de bus continu. Grâce à cela, le procédé de commande est robuste à la variation de la limite de tension de bus DC, et les performances et/ou le rendement de la machine électrique peuvent être améliorés. De plus, le procédé de commande selon l'invention permet une opération de défluxage de la machine électrique. En outre, ces étapes peuvent être adaptées à tous les types de machine électrique tournante synchrone.

Conformément à une mise en œuvre de l'invention, la variable de fonctionnement corrigée peut être la vitesse de rotation de ladite machine électrique, la tension de bus continue de l'onduleur ou la norme de la tension de commande maximale de l'onduleur.

Selon un mode de réalisation de l'invention, le modèle de contrôle peut être un modèle numérique (par exemple résultant de simulations numériques de la machine électrique), un modèle analytique ou une cartographie qui relie la consigne de couple, les variables de fonctionnement parmi lesquelles la variable de fonctionnement corrigée et les consignes de courant.

De préférence, le modèle de contrôle peut être au moins une cartographie. De préférence, le procédé de commande peut mettre en œuvre deux cartographies, une pour la consigne de courant direct, et une pour la consigne de courant en quadrature (ou respectivement une pour la norme de courant et une pour l'angle de défluxage). Avantageusement, de telles cartographies peuvent être des données du constructeur de la machine électrique, ou peuvent être obtenues par simulation ou expérimentalement. Par exemple, les cartographies utilisées peuvent être des cartographies qui minimisent pour la machine électrique les pertes fer en plus des pertes Joule.

Conformément à l'invention, on peut déterminer la prédiction de tension absolue au moyen des mesures des courants dans les phases par un estimateur. En d'autres termes, un estimateur a pour entrée des mesures des courants dans les phases et en sortie la tension absolue prédite. Autrement dit, l'estimateur relie les courants à la tensions absolue. De plus, l'estimateur mis en œuvre dans ces alternatives peut dépendre de la valeur corrigée de la variable de fonctionnement au moyen du paramètre de correction, ou du paramètre de correction et de la variable de fonctionnement. Ainsi, l'estimateur peut être fidèle aux différentes étapes permettant de déterminer le contrôle de l'onduleur.

Pour ces deux alternatives, l'estimateur peut être construit pour prendre en compte les mêmes hypothèses que celles utilisées dans le modèle de contrôle.

Selon un aspect de l'invention, on peut déterminer le paramètre de correction en mettant en œuvre les étapes suivantes :

- On détermine la prédiction de tension absolue, notée $V_{abs}^{pred}$ ,

- On acquiert les consignes de tension, $V_d{}^{sp}$ et $V_q{}^{sp}$ étant respectivement les consignes de tension directe et en quadrature,

- On calcule une tension absolue de consigne, par exemple au moyen de la formule $V_{abs}^{sp} = \sqrt{V_d^{sp2} + V_q^{sp2}}$ ou au moyen de toute formule analogue,

- On compare la prédiction de tension absolue $V_{abs}^{pred}$ et ladite tension absolue de consigne $V_{abs}^{sp}$ , et

- On en déduit le paramètre de correction à partir de la comparaison.

Puis, on corrige une des variables de fonctionnement au moyen du paramètre de correction.

Selon une option de l'invention, le paramètre de correction peut être un paramètre multiplicatif (un gain), ou un paramètre additif (un offset également appelé écart), ou un écart entre la valeur de prédiction de tension absolue et la tension absolue de consigne. Lorsque le paramètre de correction est un gain, alors la valeur de fonctionnement corrigée peut correspondre au produit de la variable de fonctionnement par le gain. Lorsque le paramètre de correction est une valeur corrigée d'une variable de la machine électrique, alors la valeur de fonctionnement corrigée peut être obtenue par toute opération mathématique entre la variable de fonctionnement et la valeur corrigée d'une variable de la machine.

Selon un mode de réalisation, le calcul du paramètre de correction Pco peut être réalisé par un étage de régulation, par exemple de type Proportionnel Intégral.

Conformément à un mode de réalisation de l'invention, on peut déterminer le signal de commande de commutation de l'onduleur au moyen des consignes de tensions et d'un contrôle vectoriel, notamment un contrôle classique du vecteur spatial SVM (de l'anglais « Space Vector Modulation »), ou toute méthode analogue. Le signal de commande déterminé correspond aux signaux de commande envoyés aux commutations des bras de commutation de l'onduleur permettant de transformer le signal du bus continu en signaux alternatifs.

Selon une mise en œuvre de l'invention, on peut déterminer le régime de fonctionnement de la machine électrique parmi l'un des régimes de fonctionnement suivants :

- Un régime de fonctionnement sans saturation de tension, qui correspond à une situation dans laquelle tension appliquée aux bornes de la machine tournante inférieure à une tension maximale disponible (tension de bus),
- Un régime de fonctionnement de saturation de tension linéaire, qui correspond à une situation où l'amplitude maximale de la tension phase à phase de la machine électrique est environ égale à celle de l'installation électrique à laquelle la machine tournante est raccordée (tension de bus), et
- Un régime de fonctionnement de saturation de tension de surmodulation (appelé régime de surmodulation), qui correspond à une situation où l'amplitude maximale de la tension phase à phase de la machine électrique est strictement supérieure à la tension de bus. La valeur de la tension phase à phase la plus élevée atteignable dans ce régime de surmodulation correspond à une commande dite « en pleine onde », et est égale classiquement à $\frac{2\sqrt{3}}{\pi}$ fois la tension de bus.

Selon une option de réalisation, la méthode d'asservissement peut être choisie parmi une méthode d'asservissement complet et une méthode d'asservissement à tension fixe. On appelle méthode d'asservissement, l'asservissement qui permet de déterminer les consignes de tension à partir des consignes de courant. La méthode d'asservissement peut mettre en œuvre au moins un régulateur, notamment un régulateur proportionnel intégral (PI).

On appelle la méthode d'asservissement complet (appelée aussi méthode d'asservissement à deux dimensions ou méthode d'asservissement à deux degrés de liberté), l'asservissement des composantes « directe » et « en quadrature » des courants simultanément, par exemple par la mise en œuvre de deux régulations, l'une portant sur les grandeurs dites « directes », et l'autre portant sur les grandeurs dites « en quadrature », afin de déterminer les tensions « directe » et « en quadrature ». La méthode d'asservissement complet peut par exemple être mise en œuvre par deux régulateurs proportionnel intégral PI.

On appelle méthode d'asservissement à tension fixe (également appelée méthode d'asservissement à une dimension ou méthode d'asservissement à un degré de liberté), l'asservissement d'une seule des composantes des courants, la deuxième composante (non asservie) est alors non pilotée. Cette méthode d'asservissement est dite à tension fixe, car une seule des deux composantes des tensions de commande est obtenue via l'asservissement de la seule composante des courants pilotée. La deuxième composante des tensions de commande est liée à la première par une contrainte de tension fixe, en l'occurrence la tension limite, et est donc obtenue par un calcul direct Ainsi, cette mise en œuvre garantit l'utilisation de la tension maximale par les consignes de tension déterminées. Selon un mode de réalisation de l'invention, on peut asservir via la consigne de tension en quadrature, et on peut déduire la consigne de tension directe en fonction de la tension limite et de la composante de tension en quadrature. Alternativement, on peut asservir via la composante de tension directe et on peut déduire la consigne de tension en quadrature. La méthode d'asservissement à tension fixe peut par exemple être mise en œuvre par un unique régulateur proportionnel intégral PI. La mise en œuvre d'un unique régulateur proportionnel intégral assure en régime de saturation de tension une commande plus robuste de la machine électrique, ce qui se traduit par une plus grande stabilité du couple mécanique fourni par la machine tournante.

Selon un aspect de l'invention, on peut déterminer une méthode d'asservissement à mettre en œuvre par comparaison d'un indice de modulation cible à un seuil prédéterminé. En effet, on peut écrire l'équation suivante : $U_{smax} = mV_{DC}$ avec $U_{smax}$ l'amplitude de la tension maximale entre les phases de la machine électrique, $V_{DC}$ la tension de bus, et m l'indice de modulation de la modulation de largeur d'impulsion (MLI) utilisé. Il en résulte que l'indice de modulation cible peut être représentatif du régime de fonctionnement souhaité.

Selon un mode réalisation de l'invention, l'indice de modulation cible peut être calculé au moyen d'au moins une stratégie de contrôle qui relie ladite consigne de couple, la variable de fonctionnement corrigée au moyen dudit paramètre de correction et les variables de fonctionnement à l'indice de modulation cible.

Par exemple, si l'indice de modulation cible est supérieur au seuil prédéterminé qui peut correspondre à l'entrée en régime de surmodulation, on peut appliquer la méthode d'asservissement à tension fixe. Dans le cas contraire on peut appliquer l'asservissement complet.

Ainsi, l'invention permet une utilisation optimale de la tension de bus, ce qui assure une amélioration du rendement de la machine électrique et/ou de la performance maximale de la machine électrique, y compris en cas de détermination imparfaite de consignes de courant, grâce à la correction d'une variable de fonctionnement. Le système et le procédé selon l'invention permettent aussi une amélioration de la précision de couple réalisé grâce à l'obtention d'un binôme de composantes directe et en quadrature des courants de stator, quand la méthode d'asservissement est à tension fixe.

Avantageusement, pour la méthode d'asservissement à tension fixe, on peut mettre en œuvre un unique régulateur PI. En particulier, on peut calculer la consigne de tension en quadrature selon la formule suivante :

$$v_q^{sp} = K'_{p,q}(i_0 - i_{ref}) + K'_{i,q} \int_{t_0}^{t_f}(i_0 - i_{ref})dt \quad \text{avec} \quad v_q^{sp}$$ la consigne de tension en quadrature, $K'_{p,q}$ et $K'_{i,q}$ des coefficients prédéterminés de l'unique régulateur proportionnel intégral, $i_0$ une grandeur définie par $i_0 = \sqrt{i_q^2 + i_d^2}$ , $i_{ref}$

une grandeur définie par $i_{ref} = \sqrt{i_d^{sp2} + i_q^{sp2}}$ $t_0$ un instant initial prédéterminé, $t_f$ un instant final prédéterminé ultérieur à l'instant initial, $i_d$ et $i_q$ respectivement un courant direct mesuré et un courant en quadrature mesuré, $i_d^{sp}$, $i_q^{sp}$ respectivement une consigne de courant direct et une consigne de courant en quadrature.

De plus, dans ce cas de figure, on peut déterminer la consigne de tension directe au moyen de la formule :

$$v_d^{sp} = \sqrt{v_{smax}^2 - \left(v_q^{sp}\right)^2}$$ avec $v_d^{sp}$ la consigne de tension directe, $v_{smax}$ est une tension limite définie par la formule

$$v_{smax} = \frac{U_{smax}}{\sqrt{3}}$$ pour une machine électrique pour laquelle les bobinages des phases sont montés en étoile, ou par la

formule $v_{smax} = U_{smax}$ pour une machine électrique pour laquelle les bobinages des phases sont montés en triangle, $U_{smax}$ étant défini par $U_{smax} = mV_{DC}$ avec m ledit indice de modulation prédéterminé de l'onduleur et $V_{DC}$ la tension de bus continue alimentant ledit onduleur.

La grandeur $i_0$ définie ci-dessus est la norme d'un vecteur (noté $i_0$) égal à la somme vectorielle, dans le repère tournant, du courant direct mesuré $i_d$ et du courant en quadrature mesuré $i_q$.

En outre, la grandeur $i_{ref}$ définie ci-dessus est la norme d'un vecteur (noté $i_{ref}$) égal à la somme vectorielle, dans le repère tournant, de la consigne de courant direct $i_d^{sp}$ et de la consigne de courant en quadrature $i_q^{sp}$ .

Avantageusement, les coefficients $K'_{p,q}$ et $K'_{i,q}$ peuvent être dynamiquement adaptés en fonction d'une ou plusieurs variables de fonctionnement, par exemple de sorte que la valeur de la consigne de tension en quadrature $v_q^{sp}$ calculée au moyen de la relation soit bornée, en particulier inférieure ou égale à la tension limite $v_{lim}$.

Selon un mode de réalisation de l'invention, les coefficients K'$_{p,q}$ et K'$_{i,q}$ peuvent être dynamiquement adaptés en fonction de la fréquence électrique du moteur.

Ces formules assurent que la machine électrique fonctionne à la puissance maximale disponible pour une tension de commande maximale définie. En outre, la première formule conduit au calcul d'une consigne de tension qui se traduit par une injection de courant dans les bobinages du stator de la machine électrique conduisant à un défluxage de la machine électrique. De plus, la composante en quadrature de la puissance consommée par la machine électrique étant prédominante devant la composante directe, il est avantageux que la première formule soit mise en œuvre sur la tension en quadrature, afin que l'action de l'unique régulateur proportionnel intégral soit optimale. Une autre raison pour laquelle il est avantageux que cette formule soit mise en œuvre sur la tension en quadrature et non pas sur la tension directe est que la valeur de la tension en quadrature est susceptible de changer de signe au cours du fonctionnement de la machine électrique, de sorte qu'il n'existe pas de bijection entre la tension directe et le vecteur $i_0$.

De manière avantageuse, pour la méthode d'asservissement complet, on peut mettre en œuvre deux régulateurs de type proportionnel intégral. Dans ce cas, on peut déterminer la consigne de tension directe et la consigne de tension en quadrature en mettant en œuvre les formules suivantes :

$$\begin{cases} v_q^{sp} = K_{p,q}\left(i_q^{sp} - i_q\right) + K_{i,q}\int_{t_0}^{t_f}\left(i_q^{sp} - i_q\right)dt \\ v_d^{sp} = K_{p,d}\left(i_d^{sp} - i_d\right) + K_{i,d}\int_{t_0}^{t_f}\left(i_d^{sp} - i_d\right)dt \end{cases}$$

Avec K$_{p,q}$ et K$_{i,q}$ les coefficients prédéterminés du correcteur proportionnel-intégral associé à la consigne de tension en quadrature (non nécessairement identiques aux coefficients dans le cas de la méthode d'asservissement à tension fixe), K$_{p,d}$, et K$_{i,d}$ les coefficient prédéterminés du correcteur proportionnel intégral associé à la consigne de tension directe, $t_0$ un instant initial prédéterminé, $t_f$ un instant final prédéterminé ultérieur à l'instant initial, $i_d$ et $i_q$ respectivement un courant direct mesuré et un courant en quadrature mesuré, $i_d^{sp}, i_q^{sp}$ respectivement une consigne de courant direct et une consigne de courant en quadrature.

Avantageusement, les coefficients K'$_{p,q}$, K'$_{i,q}$, K$_{p,d}$, et K$_{i,d}$ peuvent être dynamiquement adaptés en fonction d'une ou plusieurs variables de fonctionnement, de sorte d'améliorer la stabilité ou la rapidité de l'asservissement.

Le système de commande selon l'invention comprend un onduleur, éventuellement un capteur de position et/ou de vitesse du rotor de la machine électrique, et un calculateur et une mémoire configurés pour mettre en œuvre les étapes du procédé de commande selon l'une quelconque des variantes ou des combinaisons de variantes décrites précédemment. En outre, le système de commande peut comporter des moyens de mesure des courants dans les phases de la machine électrique, par exemple des capteurs de courant.

Selon un mode de réalisation de l'invention, la machine électrique tournante peut être une machine électrique synchrone, de préférence une machine électrique synchro-réluctante assistée d'aimants permanents. En effet, le procédé et le système selon l'invention sont particulièrement adaptés à ce type de machine électrique, notamment car l'invention permet de prendre en compte les contraintes et le fonctionnement de tous types de machines.

La figure 2 illustre, schématiquement et de manière non limitative, les étapes du procédé selon un premier mode de réalisation de l'invention. Les éléments identiques à la figure 1 ne sont pas décrits une deuxième fois. Par conséquent, seul le calculateur CAL est détaillé.

Le procédé de commande mis en œuvre par le calculateur CAL comporte dans un premier temps une étape de détermination des consignes de courants i$_d^{sp}$ et i$_q^{sp}$ à partir de la consigne de couple Cem*, et de variables de fonctionnement VAF, parmi lesquelles la variable de fonctionnement corrigée VAR$^{corr}$. Sur la figure, une seule flèche est représentée pour les variables de fonctionnement VAF pour un souci de simplification de la figure. Toutefois, cette flèche correspond bien à une pluralité de variables de fonctionnement VAF. Cette étape de détermination des consignes de courants est mise en œuvre au moyen d'un modèle de contrôle MCO.

Un unique régulateur PI noté 1PI est mis en œuvre pour déterminer les consignes de tension V$_d^{sp}$ et V$_q^{sp}$ à partir des consignes de courants i$_d^{sp}$ et i$_q^{sp}$ pour une méthode d'asservissement à tension fixe.

Deux régulateurs PI notés 2PI sont mis en œuvre pour déterminer les consignes de tension V$_d^{sp}$ et V$_q^{sp}$ à partir des consignes de courants i$_d^{sp}$ et i$_q^{sp}$ pour une méthode d'asservissement complet.

On détermine le régime de fonctionnement RFT de la machine électrique MEL : par exemple régime sans saturation de tension, régime avec saturation de tension linéaire ou régime avec saturation de tension de surmodulation. Puis on en déduit la méthode d'asservissement associée 1D/2D : respectivement la méthode d'asservissement à tension fixe ou la méthode d'asservissement complet. On détermine alors les consignes de tension SW par application de la méthode d'asservissement déterminée. En d'autres termes, les consignes de tension $V_d^{sp}$ et $V_q^{sp}$ en sortie de cette étape correspondent aux consignes de tension $V_d^{sp}$ et $V_q^{sp}$ de l'étape 1PI ou 2PI de la méthode d'asservissement déterminée.

Les consignes de tension $V_d^{sp}$ et $V_q^{sp}$ sont converties en signal de commande de commutation pour l'onduleur OND au moyen d'un contrôle de vecteur spatial SVM, ou toute méthode analogue.

En outre, le procédé de commande comporte une étape COR de détermination du paramètre de correction Pco. Cette correction est mise en œuvre à partir d'une tension absolue ABS de consigne $V_{abs}^{sp}$ qui est obtenue directement depuis les consignes de tension $V_d^{sp}$ et $V_q^{sp}$ et à partir d'une tension absolue prédite $V_{abs}^{pred}$ qui est obtenue par une étape de prédiction PRE (ou estimation) sur la base des mesures de courant courant $i_d^{mes}$ et $i_q^{mes}$. Les mesures de courant $i_d^{mes}$ et $i_q^{mes}$ sont obtenues en appliquant une transformation de PARK aux intensités $i_a$, $i_b$, $i_c$ mesurées par un capteur de courant dans les phases notées a, b et c de la machine électrique. Une telle transformation de PARK peut être réalisée en appliquant une relation du type :

$$\begin{pmatrix} i_d \\ i_q \end{pmatrix} = \begin{pmatrix} \cos\theta_e & \cos\left(\theta_e - \dfrac{2\pi}{3}\right) & \cos\left(\theta_e + \dfrac{2\pi}{3}\right) \\ -\sin\theta_e & -\sin\left(\theta_e - \dfrac{2\pi}{3}\right) & -\sin\left(\theta_e + \dfrac{2\pi}{3}\right) \end{pmatrix} \begin{pmatrix} i_A \\ i_B \\ i_C \end{pmatrix} \quad (1)$$

Avec $\theta e$ la position angulaire électrique du rotor par rapport au stator de la machine électrique (pour rappel la position angulaire électrique correspond à la multiplication de la position angulaire mécanique du rotor par rapport au stator de la machine électrique et du nombre de paires de pôles de la machine électrique).

Telle qu'illustrée, l'étape de prédiction PRE peut également prendre en compte la variable de fonctionnement corrigée VAR$^{corr}$.

Ce facteur de correction Pco corrige une variable de fonctionnement VAR en entrée du procédé de commande, de manière à déterminer la variable de fonctionnement corrigée VAR$^{corr}$ utilisée dans le modèle de contrôle MCO, formant ainsi une boucle de retour.

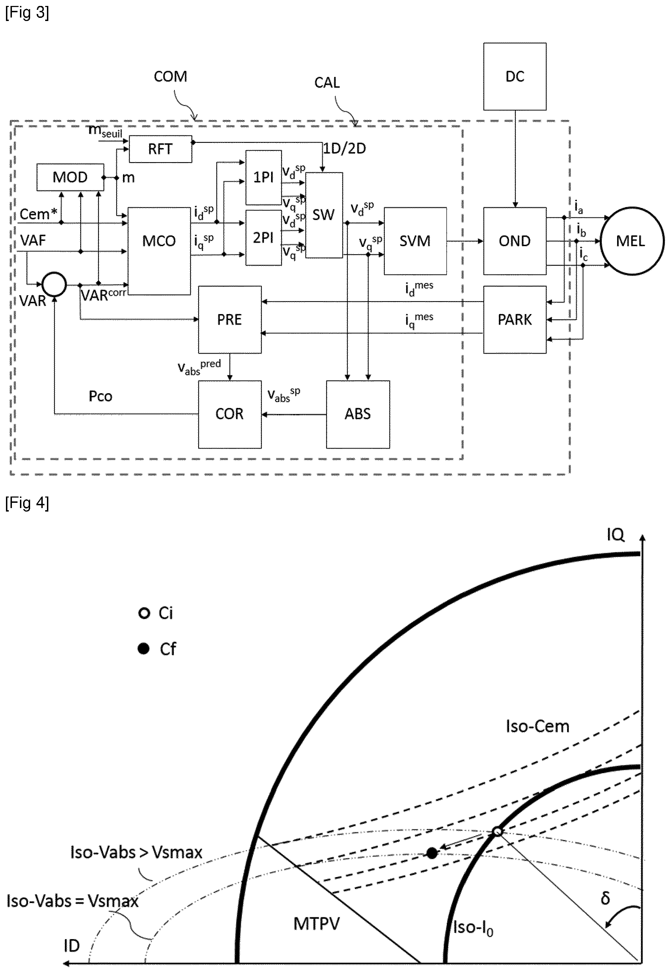

La figure 3 illustre, schématiquement et de manière non limitative, les étapes du procédé selon un deuxième mode de réalisation de l'invention. Les éléments identiques à la figure 2 ne sont pas décrits une deuxième fois.

Pour ce mode de réalisation, la consigne de couple Cem*, les variables de fonctionnement, ainsi que la variable de fonctionnement corrigée VAR$^{corr}$ sont prises en compte par MOD pour déterminer un indice de modulation cible m. Cet indice de modulation cible m est comparé à un seuil $m_{seuil}$ afin de déterminer le régime de fonctionnement RFT de la machine électrique.

En outre, l'indice de modulation cible m peut être une entrée du modèle de contrôle MCO pour déterminer les consignes de courants $i_d^{sp}$ et $i_q^{sp}$.

Selon un autre mode de réalisation de l'invention, l'indice de modulation cible m peut être une sortie du modèle de contrôle MCO. Ce mode de réalisation n'est pas illustré ici.

Exemples de fonctionnement

Les caractéristiques et avantages du procédé selon l'invention apparaîtront plus clairement à la lecture de l'exemple d'application ci-après.

Pour ces exemples, on applique le mode de réalisation de la figure 2.

Les figures 4 à 7 illustrent, schématiquement et de manière non limitative, la mise en œuvre du procédé selon un mode de réalisation de l'invention pour dans quatre situations. Ces figures représentent dans un repère des courants ID, IQ :

- En quart de cercle noir épais : les lignes de même valeur de norme de courant $i_0$ iso-$I_0$,
- En lignes pointillées formées uniquement de tirets : les lignes de même valeur de couple Iso-Cem,
- En pointillés formés par une alternance de tirets et de doubles points : les lignes de même valeur de tension absolue Iso-Vabs,
- L'angle de défluxage $\delta$,
- Une droite de limite de fonctionnement de maximum de couple par volt MTPV (de l'anglais maximum torque per volt),
- Avec un point blanc, la consigne initiale de courant Ci,
- Avec un point noir, la consigne finale de courant Cf, et
- Le cas échéant, avec un point gris, la mesure initiale du courant mes.

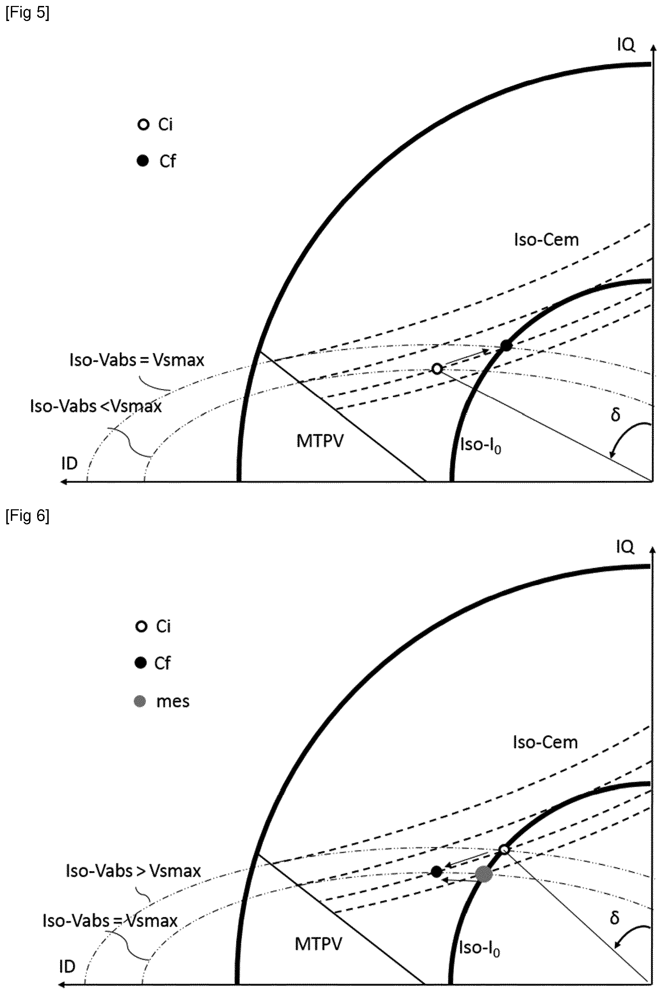

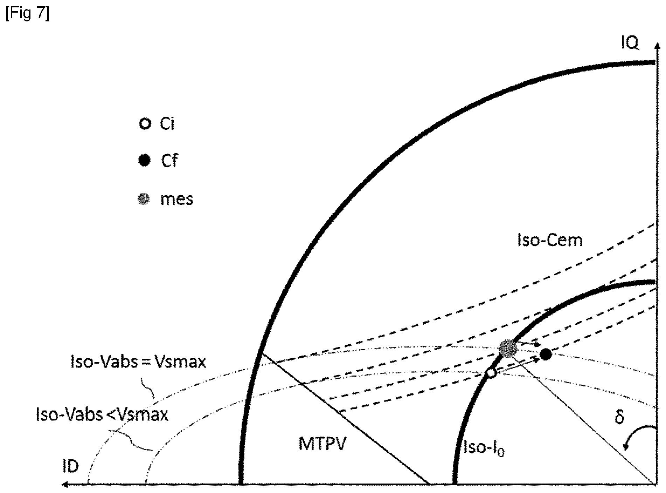

Les figures 4 et 5 concernent le cas de la méthode d'asservissement complet, et les figures 6 et 7 concernent le cas de la méthode d'asservissement à tension fixe.

Pour l'exemple de la figure 4, la tension de commande obtenue $V_{abs}^{sp}$ est supérieure à la tension prédite $V_{abs}^{pred}$, en régime de saturation de tension. Ainsi, dans les étapes du procédé selon l'invention, on obtient :

- La tension prédite $V_{abs}^{pred}$ est égale à la tension maximale $v_{smax}$ autorisée par définition, car on utilise, pour la prédiction, le même calcul théorique des consignes de tension que celui du modèle de contrôle pour la prédiction,

- La variable de fonctionnement corrigée VAR$^{corr}$ évolue dans le sens de la diminution de tension de commande. Si la variable de fonctionnement corrigée VAR$^{corr}$ est le régime, le régime corrigé augmente.

- Le calcul des consignes $i_d{}^{sp}$ et $i_q{}^{sp}$ par le modèle de contrôle MCO, obtenu via la variable de fonctionnement corrigée VAR$^{corr}$, évolue dans le sens de l'augmentation du défluxage, à iso consigne de couple de commande (Cem* constant).

- La tension de commande appliquée diminue effectivement, puisque le régime réel est fixe. La tension prédite $V_{abs}^{pred}$, qui est calculée à l'aide de la variable corrigée, ne diminue pas. Si la variable corrigée est le régime, son augmentation compense la baisse de tension due au défluxage plus important.

- La tension de commande $V_{abs}^{sp}$ converge vers la tension prédite, et la correction n'évolue plus. La tension prédite étant restée égale à la tension maximale autorisée, la tension de commande est maintenant égale à la tension maximale autorisée $v_{smax}$.

- Le couple Cem* est maintenu tout au long du processus.

Ces étapes se traduisent sur la figure 4 par la flèche qui va du point blanc Ci (consigne initiale - sp) au point noir Cf (consigne finale - com), sur une courbe de couple constant, avec une augmentation de l'angle de défluxage $\delta$, et avec une diminution de la tension de commande $V_{abs}^{sp}$.

Pour l'exemple de la figure 5, la tension de commande obtenue $V_{abs}^{sp}$ est inférieure à la tension prédite $V_{abs}^{pred}$, en régime de saturation de tension. Ainsi, dans les étapes du procédé selon l'invention, on obtient :

- La tension prédite $V_{abs}^{pred}$ est égale à la tension maximale $v_{smax}$ autorisée par définition,

- La variable de fonctionnement corrigée VAR$^{corr}$ évolue dans le sens de l'augmentation de tension de commande. Si la variable de fonctionnement corrigée VAR$^{corr}$ est le régime, le régime corrigé diminue.

- Le calcul des consignes $i_d{}^{sp}$ et $i_q{}^{sp}$ par le modèle de contrôle MCO, obtenu via la variable de fonctionnement corrigée VAR$^{corr}$, évolue dans le sens de la diminution du défluxage, à iso consigne de couple de commande (Cem* constant).

- La tension de commande appliquée augmente effectivement, puisque le régime réel est fixe. La tension prédite $V_{abs}^{pred}$, qui est calculée à l'aide de la variable corrigée, n'augmente pas. Si la variable corrigée est le régime, sa diminution compense la hausse de tension due au défluxage moins important.

- La tension de commande converge $V_{abs}^{sp}$ vers la tension prédite, et la correction n'évolue plus. La tension prédite étant restée égale à la tension maximale autorisée, la tension de commande est maintenant égale à la tension maximale autorisée $v_{smax}$.

- Le couple Cem* est maintenu tout au long du processus.

Ces étapes se traduisent sur la figure 5 par la flèche qui va du point blanc Ci (consigne initiale) au point noir Cf (consigne finale), sur une courbe de couple constant, avec une diminution de l'angle de défluxage $\delta$, et avec une

augmentation de la tension de commande $V_{abs}^{sp}$ .

Pour l'exemple de la figure 6, la tension de commande obtenue $V_{abs}^{sp}$ est supérieure à la tension prédite $V_{abs}^{pred}$ , en régime de saturation de tension. Ainsi, dans les étapes du procédé selon l'invention, on obtient :

- La tension de commande $V_{abs}^{sp}$ est égale à la tension maximale v$_{smax}$ autorisée,

- La norme de courant i$_0$ est égale à la consigne, mais l'angle de défluxage $\delta$ n'est pas asservi,

- La tension prédite $V_{abs}^{pred}$ est inférieure à la tension maximale v$_{smax}$ obtenue, cela signifie que l'angle de défluxage $\delta$ est supérieur à celui attendu, le couple obtenu est donc inférieur à celui attendu,

- La variable de fonctionnement corrigée VAR$^{corr}$ évolue dans le sens de la diminution de tension de commande. Si la variable de fonctionnement corrigé VAR$^{corr}$ est le régime, le régime corrigé augmente.

- Le calcul des consignes i$_d$$^{sp}$ et i$_q$$^{sp}$ par le modèle de contrôle MCO, obtenu via la variable de fonctionnement corrigée VAR$^{corr}$, évolue dans le sens de l'augmentation du défluxage, à iso consigne de couple de commande (Cem* constant), ce qui entraîne aussi une augmentation de la consigne de la norme de courant.

- La consigne de norme de courant étant asservie, la norme du courant obtenu augmente ainsi que le défluxage $\delta$ mais à iso amplitude de la tension de commande Iso-Vabs,

- Structurellement pour toutes les machines électriques synchrones assistés d'aimants, les trajectoires d'évolution de l'angle de défluxage à iso-couple et à iso-amplitude de la tension de commande se rejoignent,

- Lorsque les angles de défluxage de consigne et obtenus sont égaux, la tension prédite $V_{abs}^{pred}$ est égale à la tension maximale autorisée v$_{smax}$, puisqu'elle est déterminée à l'aide de la variable de fonctionnement corrigée VAR$^{corr}$, ainsi le système se stabilise,

- Enfin, les consignes de norme de courant (asservie) et d'angle de défluxage sont égales aux valeurs obtenues, ce qui permet d'obtenir la consigne de couple Cem*.

Ces étapes se traduisent sur la figure 6 par la flèche qui va du point blanc Ci (consigne initiale) au point noir Cf (consigne finale), sur une courbe de couple constant, et par la flèche qui va du point gris mes (mesure) au point noir Cf (mesure finale) sur une courbe de tension constante, et avec une augmentation de l'angle de défluxage $\delta$. Les deux flèches se rejoignent donc en unique point, qui montre la convergence du procédé selon l'invention.

Pour l'exemple de la figure 7, la tension de commande obtenue $V_{abs}^{sp}$ est inférieure à la tension prédite $V_{abs}^{pred}$ , en régime de saturation de tension. Ainsi, dans les étapes du procédé selon l'invention, on obtient :

- La tension de commande $V_{abs}^{sp}$ est égale à la tension maximale v$_{smax}$,

- La norme de courant i$_0$ est égale à la consigne, mais l'angle de défluxage $\delta$ n'est pas asservi,

- La tension prédite $V_{abs}^{pred}$ est supérieure à la tension maximale v$_{smax}$ obtenue, cela signifie que l'angle de défluxage est inférieur à celui attendu, le couple obtenu est donc supérieur à celui attendu,

- La variable de fonctionnement corrigée VAR$^{corr}$ évolue dans le sens de l'augmentation de la tension de commande. Si la variable de fonctionnement corrigé VAR$^{corr}$ est le régime, le régime corrigé diminue.

- Le calcul des consignes i$_d$$^{sp}$ et i$_q$$^{sp}$ par le modèle de contrôle MCO, obtenu via la variable de fonctionnement corrigée VAR$^{corr}$, évolue dans le sens de la diminution du défluxage, à iso consigne de couple de commande (Cem* constant), ce qui entraîne aussi une diminution de la consigne de la norme de courant.

- La consigne de norme de courant étant asservie, la norme du courant obtenu diminue ainsi que le défluxage $\delta$ mais à iso amplitude de la tension de commande Iso-Vabs,

- Structurellement pour toutes les machines électriques synchrones assistés d'aimants, les trajectoires d'évolution de l'angle de défluxage à iso-couple et à iso-amplitude de la tension de commande se rejoignent,

- Lorsque les angles de défluxage de consigne et obtenus sont égaux, la tension prédite $V_{abs}^{pred}$ est égale à la tension maximale autorisée $U_{smax}$, puisqu'elle est déterminée à l'aide de la variable de fonctionnement corrigée VAR$^{corr}$, ainsi le système se stabilise,

- Enfin, les consignes de norme de courant (asservie) et d'angle de défluxage sont égales aux valeurs obtenues, ce qui permet d'obtenir la consigne de couple Cem*.

Ces étapes se traduisent sur la figure 6 par la flèche qui va du point blanc Ci (consigne initiale) au point noir Cf (consigne finale), sur une courbe de couple constant, et par la flèche qui va du point gris mes (mesure) au point noir Cf (mesure finale) sur une courbe de tension constante, et avec une diminution de l'angle de défluxage $\delta$. Les deux flèches se rejoignent donc en unique point, qui montre la convergence du procédé selon l'invention.

## Revendications

1. Procédé de commande d'une machine électrique (MEL) pilotée par un onduleur (OND) pourvu de plusieurs bras de commutation, dans lequel on met en œuvre les étapes suivantes :

    a. On acquiert une consigne de couple (Cem*) de ladite machine électrique (MEL) ;
    b. On acquiert une consigne ou une mesure d'au moins une variable de fonctionnement (VAF) de ladite machine électrique (MEL), ladite variable de fonctionnement étant une grandeur qui caractérise le fonctionnement de la machine électrique, notamment la variable de fonctionnement est une variable électrique, comme la tension, le courant, ou la puissance de la machine électrique, ou une variable mécanique comme la position, la vitesse ou l'accélération du rotor de la machine électrique ;
    c. On détermine un paramètre de correction (Pco) d'une variable de fonctionnement (VAF) en fonction d'une prédiction (PRE) de tension absolue dépendante des courants dans les phases de ladite machine électrique, et en fonction de consignes de tension $V_d{}^{sp}$ et $V_q{}^{sp}$, ladite prédiction de tension absolue étant déterminée au moyen des mesures des courants dans les phases par un estimateur ;
    d. On détermine des consignes de courant $i_d{}^{sp}$ et $i_q{}^{sp}$ de ladite machine électrique (MEL) au moyen d'un modèle de contrôle (MCO) qui relie ladite consigne de couple (Cem*), ladite au moins une variable de fonctionnement (VAF), une variable de fonctionnement (VAR$^{corr}$) étant corrigée au moyen dudit paramètre de correction (Pco) ;
    e. On détermine un régime de fonctionnement (RFT) de ladite machine électrique (MEL), et on détermine une méthode d'asservissement (1PI ; 2PI) desdites consignes de courant $i_d{}^{sp}$ et $i_q{}^{sp}$ en fonction dudit régime de fonctionnement (RFT) de ladite machine électrique (MEL), ladite méthode d'asservissement reliant lesdites consignes de tension auxdites consignes de courant $i_d{}^{sp}$ et $i_q{}^{sp}$, ladite méthode d'asservissement est choisie parmi une méthode d'asservissement complet (2PI), dans laquelle l'asservissement des composantes « directe » et « en quadrature » des courants est simultané, ou une méthode d'asservissement à tension fixe (1PI), dans laquelle on asservit une seule des composantes des courants, la deuxième composante est alors non pilotée;
    f. On applique ladite méthode d'asservissement (1PI ; 2PI) déterminée auxdites consignes de courant $i_d{}^{sp}$ et $i_q{}^{sp}$ pour déterminer lesdites consignes de tension $V_d{}^{sp}$, $V_q{}^{sp}$ ;
    g. On détermine un signal de commande de commutation dudit onduleur (OND) au moyen desdites consignes de tension ; et
    h. On commande ledit onduleur (OND) au moyen dudit signal de commande.

2. Procédé de commande selon la revendication 1, dans lequel ledit modèle de contrôle (MCO) est une cartographie qui relie ladite consigne de couple (Cem*), lesdites variables de fonctionnement (VAF) et lesdites consignes de courant $i_d{}^{sp}$ et $i_q{}^{sp}$.

3. Procédé de commande selon l'une des revendications précédentes, dans lequel on détermine, par un estimateur, ladite prédiction (PRE) de tension absolue au moyen de mesures desdits courants dans lesdites phases de ladite machine électrique (MEL).

**4.** Procédé de commande selon l'une des revendications précédentes, dans lequel on détermine ladite méthode d'asservissement (1PI ; 2PI) par comparaison d'un indice de modulation cible (m) d'une méthode de modulation de largeur d'impulsion (MLI) utilisée pour la commande de commutation dudit onduleur à un seuil.

**5.** Procédé de commande selon la revendication 4, dans lequel si ledit indice de modulation cible (m) est supérieur audit seuil, on applique ladite méthode d'asservissement à tension fixe (1PI).

**6.** Procédé de commande selon la revendication 5, dans lequel ladite méthode d'asservissement complet (2PI) met en œuvre deux régulateurs proportionnel intégral, et ladite méthode d'asservissement à tension fixe (1PI) met en œuvre un unique régulateur proportionnel intégral.

**7.** Procédé de commande selon la revendication 6, dans lequel l'unique régulateur proportionnel intégral de ladite méthode d'asservissement à tension fixe (1PI) détermine la consigne de tension en quadrature au moyen de la formule : $v_q^{sp} = K'_{p,q}(i_0 - i_{ref}) + K'_{i,q} \int_{t_0}^{t_f}(i_0 - i_{ref})dt$ avec $v_q^{sp}$ ladite consigne de tension en quadrature, $K'_{p,q}$ et $K'_{i,q}$ des coefficients prédéterminés de l'unique régulateur proportionnel intégral, $i_0$ une grandeur définie par $i_0 = \sqrt{i_q^2 + i_d^2}$, $i_{ref}$ une grandeur définie par $i_{ref} = \sqrt{i_d^{sp\,2} + i_q^{sp\,2}}$, $t_0$ un instant initial prédéterminé, $t_f$ un instant final prédéterminé ultérieur à l'instant initial, $i_d$ et $i_q$ respectivement un courant direct mesuré et un courant en quadrature mesuré, $i_d^{sp}$, $i_q^{sp}$ respectivement une consigne de courant direct et une consigne de courant en quadrature.

**8.** Procédé de commande selon la revendication 7, dans lequel on détermine la consigne de tension directe au moyen de la formule : $v_d^{sp} = \sqrt{v_{smax}^2 - \left(v_q^{sp}\right)^2}$ avec $v_d^{sp}$ la consigne de tension directe, $v_{smax}$ est une tension limite définie par la formule $v_{smax} = \frac{U_{smax}}{\sqrt{3}}$ pour une machine électrique pour laquelle les bobinages des phases sont montés en étoile, ou par la formule $v_{smax} = U_{smax}$ pour une machine électrique pour laquelle les bobinages des phases sont montés en triangle, $U_{smax}$ étant défini par $U_{smax} = mV_{DC}$ avec m ledit indice de modulation prédéterminé de l'onduleur et $V_{DC}$ la tension de bus continue alimentant ledit onduleur.

**9.** Procédé de commande selon l'une des revendications précédentes, dans lequel ledit régime de fonctionnement (RFT) de ladite machine électrique est déterminé parmi un régime de fonctionnement sans saturation de tension, un régime de fonctionnement de saturation de tension de surmodulation ou un régime de fonctionnement de saturation de tension linéaire.

**10.** Procédé de commande selon l'une des revendications précédentes, dans lequel on détermine ledit paramètre de correction (Pco) en mettant en œuvre les étapes suivantes :

    i) On détermine une prédiction de tension absolue ($v_{abs}^{pred}$) ;
    ii) On acquiert lesdites consignes de tension ($V_d^{sp}$, $V_q^{sp}$) ;

    iii) On calcule une tension absolue de consigne par la formule : $V_{abs}^{sp} = \sqrt{V_d^{sp\,2} + V_q^{sp\,2}}$, $V_d^{sp}$ et $V_q^{sp}$ étant respectivement les consignes de tension directe et en quadrature
    iv) On compare ladite prédiction de tension absolue ($v_{abs}^{pred}$) à ladite tension absolue de consigne ($v_{abs}^{sp}$) ; et
    v) On en déduit ledit paramètre de correction (Pco) à partir de ladite comparaison.

**11.** Procédé de commande selon l'une des revendications précédentes, dans lequel on détermine ledit signal de commande de commutation au moyen d'un contrôle vectoriel (SVM).

**12.** Procédé de commande selon l'une des revendications précédentes, dans lequel ladite variable de fonctionnement corrigée (VAR^corr) est la vitesse de rotation de ladite machine électrique, la tension de bus continue de l'onduleur ou la norme de la tension de commande maximale de l'onduleur.

13. Système de commande d'une machine électrique (MEL) comprenant un onduleur (OND) pourvu de bras de commutation, un calculateur et une mémoire configurée pour mettre en œuvre les étapes du procédé de commande selon l'une des revendications précédentes pour commander ledit onduleur (OND), de préférence ladite machine électrique (MEL) est une machine synchro-reluctante assistée par des aimants permanents ou une machine synchrone à aimants permanents.

**Patentansprüche**

1. Verfahren zur Steuerung einer elektrischen Maschine (MEL), die von einem Wechselrichter (OND) angesteuert wird, der mit mehreren Schaltarmen versehen ist, bei dem die folgenden Schritte durchgeführt werden:

   a. Erfassen eines Drehmomentsollwerts (Cem*) der elektrischen Maschine (MEL);
   b. Erfassen eines Sollwerts oder einer Messung von mindestens einer Betriebsgröße (VAF) der elektrischen Maschine (MEL), wobei die Betriebsgröße eine Größe ist, die den Betrieb der elektrischen Maschine charakterisiert, insbesondere ist die Betriebsgröße eine elektrische Größe wie die Spannung, der Strom oder die Leistung der elektrischen Maschine oder eine mechanische Größe wie die Position, die Geschwindigkeit oder die Beschleunigung des Rotors der elektrischen Maschine;
   c. Bestimmen eines Korrekturparameters (Pco) einer Betriebsgröße (VAF) als Funktion einer Vorhersage (PRE) einer absoluten Spannung, die von den Strömen in den Phasen der elektrischen Maschine abhängig ist, und in Abhängigkeit von Spannungssollwerten $V_d^{sp}$ und $V_q^{sp}$, wobei die Vorhersage der absoluten Spannung anhand der Messungen der Ströme in den Phasen durch einen Schätzer bestimmt wird;
   d. Bestimmen der Stromsollwerte $i_d^{sp}$ und $i_q^{sp}$ der elektrischen Maschine (MEL) mit Hilfe eines Kontrollmodells (MCO), das den Drehmomentsollwert (Cem*), die mindestens eine Betriebsgröße (VAF), eine Betriebsgröße (VAR$^{corr}$), die mit Hilfe des Korrekturparameters (Pco) korrigiert wird, in Beziehung setzt;
   e. Bestimmen eines Betriebszustands (RFT) der elektrischen Maschine (MEL) und Bestimmen eines Regelungsverfahrens (1PI; 2PI) für die Stromsollwerte $i_d^{sp}$ und $i_q^{sp}$ als Funktion des Betriebszustands (RFT) der elektrischen Maschine (MEL), wobei das Regelungsverfahren die Spannungssollwerte mit den Stromsollwerten $i_d^{sp}$ und $i_q^{sp}$ in Beziehung setzt, wobei das Regelungsverfahren aus einem vollständigen Regelungsverfahren (2PI), bei dem die Regelung der "direkten" und "quadratischen" Komponenten der Ströme gleichzeitig erfolgt, oder einem Festspannungs-Regelungsverfahren (1PI), bei dem nur eine der Komponenten der Ströme geregelt wird, während die zweite Komponente ungeregelt bleibt, ausgewählt wird;
   f. Anwenden des Regelungsverfahrens (1PI; 2PI) auf die Stromsollwerte $i_d^{sp}$ und $i_q^{sp}$, um die Spannungssollwerte $V_d^{sp}$, $V_q^{sp}$ zu bestimmen;
   g. Bestimmen eines Schaltsteuersignal des Wechselrichters (OND) mit Hilfe der Spannungssollwerte; und
   h. Steuern des Wechselrichters (OND) mit Hilfe des Steuersignals.

2. Verfahren zur Steuerung nach Anspruch 1, wobei das Kontrollmodell (MCO) ein Kennfeld ist, das den Drehmomentsollwert (Cem*), die Betriebsgrößen (VAF) und die Stromsollwerte $i_d^{sp}$ und $i_q^{sp}$ in Beziehung setzt.

3. Verfahren zur Steuerung nach einem der vorhergehenden Ansprüche, wobei die Vorhersage (PRE) der absoluten Spannung anhand von Messungen der Ströme in den Phasen der elektrischen Maschine (MEL) durch einen Schätzer bestimmt wird.

4. Verfahren zur Steuerung nach einem der vorstehenden Ansprüche, wobei das Regelungsverfahren (1PI; 2PI) durch Vergleich eines Zielmodulationsindex (m) eines zur Schaltsteuerung des Wechselrichters verwendeten Pulsweitenmodulationsverfahrens (MLI) mit einem Schwellenwert bestimmt wird.

5. Verfahren zur Steuerung nach Anspruch 4, wobei, wenn der Zielmodulationsindex (m) über dem Schwellenwert liegt, das Festspannungs-Regelungsverfahren (1PI) angewendet wird.

6. Verfahren zur Steuerung nach Anspruch 5, wobei das vollständige Regelungsverfahren (2PI) zwei Proportional-Integral-Regler verwendet und das Festspannungs-Regelungsverfahren (1PI) einen einzigen Proportional-Integral-Regler verwendet.

7. Verfahren zur Steuerung nach Anspruch 6, wobei der einzige Proportional-Integral-Regler des Festspannungs-Regelungsverfahrens (1PI) den Quadraturspannungssollwert anhand der folgenden Formel bestimmt:

$$v_q^{sp} = K'_{p,q}\left(i_0 - i_{ref}\right) + K'_{i,q} \int_{t_0}^{t_f}\left(i_0 - i_{ref}\right)\mathrm{dt}$$ , wobei $v_q^{sp}$ der Quadraturspannungssollwert ist, $K'_{p,q}$ und $K'_{i,q}$ vorab festgelegten Koeffizienten des einzigen Proportional-Integral-Reglers sind, $i_0$ eine durch

$$i_0 = \sqrt{i_q^2 + i_d^2}$$ definierte Größe ist, $i_{ref}$ eine durch $$i_{ref} = \sqrt{i_d^{sp2} + i_q^{sp2}}$$ definierte Größe ist, $t_0$ ein vorab festgelegter Anfangszeitpunkt ist, $t_f$ ein vorab festgelegter Endzeitpunkt nach dem Anfangszeitpunkt ist, $i_d$ und $i_q$ ein gemessener Direktstrom beziehungsweise ein gemessener Quadraturstrom sind, $i_d^{sp}$, $i_q^{sp}$ ein Direktstromsollwert beziehungsweise ein Quadraturstromsollwert sind.

8. Verfahren zur Steuerung nach Anspruch 7, wobei der Direktspannungssollwerts anhand der folgenden Formel bestimmt wird: $$v_d^{sp} = \sqrt{v_{smax}^2 - (v_q^{sp})^2}$$ , wobei $v_d^{sp}$ der Direktspannungssollwert ist, $v_{smax}$ eine Grenzspannung ist, die durch die Formel $v_{smax} = \frac{U_{smax}}{\sqrt{3}}$ für eine elektrische Maschine definiert ist, bei der die Phasenwicklungen sternförmig angeordnet sind, oder anhand der Formel $V_{smax} = U_{smax}$ für eine elektrische Maschine, bei der die Phasenwicklungen dreiecksförmig angeordnet sind, wobei $U_{smax}$ definiert ist als $U_{smax} = mV_{DC}$, wobei m der vorab festgelegte Modulationsindex des Wechselrichters und $V_{dc}$ die Gleichstrombusspannung ist, die den Wechselrichter versorgt.

9. Verfahren zur Steuerung nach einem der vorhergehenden Ansprüche, wobei der Betriebszustand (RFT) der elektrischen Maschine aus einem Betriebszustand ohne Spannungsübersteuerung, einem Betriebszustand mit Spannungsübersteuerung durch Übermodulation oder einem Betriebszustand mit linearer Spannungsübersteuerung ausgewählt wird.

10. Verfahren zur Steuerung nach einem der vorhergehenden Ansprüche, wobei der Korrekturparameter (Pco) durch Durchführung der folgenden Schritte bestimmt wird:

   i) Bestimmen einer Vorhersage der absoluten Spannung ($V_{abs}^{pred}$);
   ii) Erfassen der Spannungssollwerte ($V_d^{sp}$, $V_q^{sp}$);

   iii) Berechnen einer absoluten Sollspannung anhand der Formel: $$V_{abs}^{sp} = \sqrt{V_d^{sp2} + V_q^{sp2}}$$ , wobei $V_d^{sp}$ und $V_q^{sp}$ die Direktbeziehungsweise Quadraturspannungssollwerte sind;
   iv) Vergleichen der Vorhersage der absoluten Spannung ($v_{abs}^{pred}$) mit der absoluten Sollspannung ($v_{abs}^{sp}$); und
   v) Ableiten des Korrekturparameters (Pco) ausgehend von dem Vergleich.

11. Verfahren zur Steuerung nach einem der vorhergehenden Ansprüche, wobei das Schaltsteuersignal mit Hilfe einer vektoriellen Kontrolle (SVM) bestimmt wird.

12. Verfahren zur Steuerung nach einem der vorhergehenden Ansprüche, wobei die korrigierte Betriebsgröße (VAR$^{corr}$) die Drehzahl der elektrischen Maschine, die Gleichstrombusspannung des Wechselrichters oder die Norm der maximalen Steuerspannung des Wechselrichters ist.

13. System zur Steuerung einer elektrischen Maschine (MEL), das einen Wechselrichter (OND) aufweist, der mit einem Schaltarm versehen ist, einen Rechner und einen Speicher, der dazu ausgestaltet ist, die Schritte des Verfahrens zur Steuerung nach einem der vorhergehenden Ansprüche durchzuführen, um den Wechselrichter (OND) zu steuern, wobei die elektrische Maschine (MEL) bevorzugt eine permanentmagnetunterstützte Synchron-Reluktanzmaschine oder eine Synchronmaschine mit Permanentmagneten ist.

**Claims**

1. Method for controlling an electric machine (MEL) controlled by an inverter (OND) provided with several switching arms, wherein the following steps are implemented:

a. a torque setpoint (Cem*) of said electric machine (MEL) is acquired;

b. a setpoint or a measurement of at least one operating variable (VAF) of said electric machine (MEL) is acquired, said operating variable being a quantity which characterizes the operation of the electric machine; notably, the operating variable is an electrical variable such as the voltage, the current, or the power of the electric machine or a mechanical variable such as the position, the speed or the acceleration of the rotor of the electric machine;

c. a correction parameter (Pco) of an operating variable (VAF) is determined as a function of an absolute voltage prediction (PRE) which is dependent on the currents in the phases of said electric machine, and as a function of voltage setpoints $V_d{}^{sp}$ and $V_q{}^{sp}$, said absolute voltage prediction being determined by means of the measurements of the currents in the phases by an estimator;

d. current setpoints $i_d{}^{sp}$ and $i_q{}^{sp}$ of said electric machine (MEL) are determined by means of a control model (MCO) which connects said torque setpoint (Cem*) and said at least one operating variable (VAF), an operating variable (VAR$^{corr}$) being corrected by means of said correction parameter (Pco);

e. an operating mode (RFT) of said electric machine (MEL) is determined, and a method (1PI; 2PI) for servo-controlling said current setpoints $i_d{}^{sp}$ and $i_q{}^{sp}$ is determined as a function of said operating mode (RFT) of said electric machine (MEL), said servo-control method connecting said voltage setpoints to said current setpoints $i_d{}^{sp}$ and $i_q{}^{sp}$, said servo-control method being chosen from among a complete servo-control method (2PI), in which the servo-controlling of the "forward" and "quadrature" components of the currents is simultaneous, or a fixed-voltage servo-control method (1PI), in which only one of the components of the currents is servo-controlled, the second component then being uncontrolled;

f. said determined servo-control method (1PI; 2PI) is applied to said current setpoints $i_d{}^{sp}$ and $i_q{}^{sp}$ in order to determine said voltage setpoints $V_d{}^{sp}$, $V_q{}^{sp}$;

g. a switching control signal for said inverter (OND) is determined by means of said voltage setpoints; and

h. said inverter (OND) is controlled by means of said control signal.

2. Control method according to Claim 1, wherein said control model (MCO) is a map which connects said torque setpoint (Cem*), said operating variables (VAF) and said current setpoints $i_d{}^{sp}$ and $i_q{}^{sp}$.

3. Control method according to one of the preceding claims, wherein said absolute voltage prediction (PRE) is determined, by an estimator, by means of measurements of said currents in said phases of said electric machine (MEL) .

4. Control method according to one of the preceding claims, wherein said servo-control method (1PI; 2PI) is determined by comparing a target modulation index (m) of a pulse-width modulation (PWM) method used to control switching of said inverter with a threshold.

5. Control method according to Claim 4, wherein, if said target modulation index (m) is above said threshold, said fixed-voltage servo-control method (1PI) is applied.

6. Control method according to Claim 5, wherein said complete servo-control method (2PI) implements two proportional-integral controllers, and said fixed-voltage servo-control method (1PI) implements a single proportional-integral controller.

7. Control method according to Claim 6, wherein the single proportional-integral controller of said fixed-voltage servo-control method (1PI) determines the quadrature voltage setpoint by means of the formula:

$$v_q^{sp} = K'_{p,q}\left(i_0 - i_{ref}\right) + K'_{i,q} \int_{t_0}^{t_f}\left(i_0 - i_{ref}\right)\mathrm{dt}$$ , with $v_q^{sp}$ being said quadrature voltage setpoint, $K'_{p,q}$ and $K'_{i,q}$ predetermined coefficients of the single proportional-integral controller, $i_0$ a quantity defined by

$$i_0 = \sqrt{i_q^2 + i_d^2}$$ , $i_{ref}$ a quantity defined by $$i_{ref} = \sqrt{i_d^{sp2} + i_q^{sp2}}$$ , $t_0$ a predetermined initial instant, $t_f$ a predetermined final instant which is subsequent to the initial instant, $i_d$ and $i_q$ a measured forward current and a measured quadrature current, respectively, and $i_d^{sp}$ and $i_q^{sp}$ a forward current setpoint and a quadrature current setpoint, respectively.

8. Control method according to Claim 7, wherein the forward voltage setpoint is determined by means of the formula:

$$v_d^{sp} = \sqrt{v_{smax}^2 - (v_q^{sp})^2}$$ , with $v_d^{sp}$ being the forward voltage setpoint, $v_{smax}$ is a limit voltage defined by the

formula $v_{smax} = \dfrac{U_{smax}}{\sqrt{3}}$ for an electric machine for which the phase windings are star-connected, or by the formula $v_{smax} = U_{smax}$ for an electric machine for which the phase windings are delta-connected, $U_{smax}$ being defined by $U_{smax} = mV_{DC}$, with m being said predetermined modulation index of the inverter and $V_{DC}$ the DC bus voltage supplying power to said inverter.

9. Control method according to one of the preceding claims, wherein said operating mode (RFT) of said electric machine is determined from among an operating mode without voltage saturation, an overmodulation voltage saturation operating mode or a linear voltage saturation operating mode.

10. Control method according to one of the preceding claims, wherein said correction parameter (Pco) is determined by implementing the following steps:

    i) an absolute voltage prediction ($v_{abs}{}^{pred}$) is determined;
    ii) said voltage setpoints ($V_d{}^{sp}$, $V_q{}^{sp}$) are acquired;

    iii) a setpoint absolute voltage is calculated using the formula: $V_{abs}^{sp} = \sqrt{V_d^{sp2} + V_q^{sp2}}$ , $V_d{}^{sp}$ and $V_q{}^{sp}$ being the forward and quadrature voltage setpoints, respectively;
    iv) said absolute voltage prediction ($v_{abs}{}^{pred}$) is compared with said setpoint absolute voltage ($v_{abs}{}^{sp}$); and
    v) said correction parameter (Pco) is deduced on the basis of said comparison.

11. Control method according to one of the preceding claims, wherein said switching control signal is determined by means of vector control (SVM).

12. Control method according to one of the preceding claims, wherein said corrected operating variable ($VAR^{corr}$) is the rotational speed of said electric machine, the DC bus voltage of the inverter or the standard of the maximum control voltage of the inverter.

13. System for controlling an electric machine (MEL) comprising an inverter (OND) provided with switching arms, a computer and a memory which is configured to implement the steps of the control method according to one of the preceding claims in order to control said inverter (OND); preferably, said electric machine (MEL) is a permanent magnet assisted synchronous reluctance machine or a permanent magnet synchronous machine.

[Fig 1]

[Fig 2]

[Fig 3]

[Fig 4]

[Fig 5]

[Fig 6]

[Fig 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- FR 3089368
- FR 3112043 A1